Europäisches Patentamt

(19) European Patent Office

Office européen des brevets

(11) **EP 0 974 042 B1**

(12) **FASCICULE DE BREVET EUROPEEN**

(45) Date de publication et mention
de la délivrance du brevet:
**28.04.2004 Bulletin 2004/18**

(21) Numéro de dépôt: **99901675.1**

(22) Date de dépôt: **01.02.1999**

(51) Int Cl.$^7$: **G01J 4/00**

(86) Numéro de dépôt international:
**PCT/FR1999/000200**

(87) Numéro de publication internationale:
**WO 1999/040399 (12.08.1999 Gazette 1999/32)**

(54) **POLARIMETRE ET PROCEDE DE MESURE CORRESPONDANT**

POLARIMETER UND ZUGEHÖRIGES MESSVERFAHREN

POLARIMETER AND CORRESPONDING MEASURING METHOD

(84) Etats contractants désignés:
**CH DE FR GB LI**

(30) Priorité: **09.02.1998 FR 9801498**

(43) Date de publication de la demande:
**26.01.2000 Bulletin 2000/04**

(73) Titulaire: **CENTRE NATIONAL DE
LA RECHERCHE SCIENTIFIQUE
75016 Paris Cédex (FR)**

(72) Inventeurs:
• **COMPAIN, Eric
F-75014 Paris (FR)**
• **DREVILLON, Bernard
F-92140 Clamart (FR)**

(74) Mandataire: **Michelet, Alain et al
Cabinet Harlé et Phélip
7, rue de Madrid
75008 Paris (FR)**

(56) Documents cités:
**DE-A- 4 319 036**

• **AZZAM R M A: "MULTICHANNEL
POLARIZATION STATE DETECTORS FOR
TIME-RESOLVED ELLOPSOMETRY" THIN
SOLID FILMS, vol. 234, no. 1/02, 25 octobre 1993,
pages 371-374, XP000397456 cité dans la
demande**
• **TEWARI R D ET AL: "Modified polarizing prism"
OPTICS AND LASER TECHNOLOGY, vol. 30, no.
1, février 1998, page 63-70 XP004124524**
• **G.E. JELLISON: "FOUR-CHANNEL
POLARIMETER FOR TIME-RESOLVED
ELLIPSOMETRY" OPTICS LETTERS., vol. 12, no.
10, octobre 1987, pages 766-768, XP002082338
WASHINGTON US**

Printed by Jouve, 75001 PARIS (FR)

**Description**

La présente invention se rapporte a un polarimètre et a un procédé de mesure d'états de polarisation d'un faisceau lumineux.

On connaît divers types de polarimètres permettant de mesurer toutes les composantes de polarisation de la lumière, c'est-à-dire les quatre composantes du vecteur de Stokes S de la lumière. Notamment, l'article « Multichannel polarization state detectors for time-resolved ellipsometry » de R.M.A. AZZAM, Thin Solid Films, vol. 234, pp. 371-374, 1993, présente des techniques consistant à séparer un faisceau à mesurer en plusieurs faisceaux et à traiter ensuite ces différents faisceaux en parallèle. Le nombre n de faisceaux finaux est au moins égal à quatre, de façon à ce que les n intensités mesurées des faisceaux finaux permettent d'accéder aux quatre états de polarisation de la lumière, c'est-à-dire aux quatre composantes I, Q, U, V du vecteur de Stokes S.

Ainsi, AZZAM a décrit dans l'article « Division-of-amplitude photopolarimeter (DOAP) for the simultaneous measurement of four Stokes parameters of light », Optica Acta, Vol. 29, N° 5, pp. 685-689, 1982, un polarimètre à division d'amplitude dont le principe est le suivant: le faisceau lumineux incident est d'abord séparé en un faisceau réfléchi et un faisceau transmis par une lame séparatrice de faisceaux, puis en quatre par deux prismes de Wallaston.

De tels polarimètres permettent, grâce à un multiplexage de l'information, de mesurer en temps réel les composantes de polarisation de la lumière. De plus, ils ne requièrent ni modulation, ni partie mobile. Cependant, du fait que la lame séparatrice produit des effets interférentiels, les propriétés du polarimètre dépendent fortement de la longueur d'onde de la lumière. Des applications spectroscopiques sont donc exclues et il est généralement nécessaire de procéder à des mesures monochromatiques.

Un autre inconvénient de ce dispositif est sa grande sensibilité à l'angle d'incidence du faisceau.

La présente invention concerne un polarimètre du type à division d'amplitude, qui peut être utilisé dans une très grande fenêtre spectrale.

Le polarimètre selon l'invention peut également être peu sensible à l'angle d'incidence. Qui plus est, il peut permettre d'obtenir un bon niveau de sensibilité de mesure et une faible propagation d'erreurs relatives sur les intensités mesurées, donc une bonne précision sur le vecteur de Stokes S.

L'invention concerne aussi un procédé de mesure d'états de polarisation d'un faisceau lumineux ayant les avantages précités.

A cet effet, l'invention a pour objet un polarimètre comprenant:

- un séparateur initial destiné à séparer un faisceau incident de lumière à mesurer ayant un vecteur de Stokes en un faisceau réfléchi et un faisceau transmis, le séparateur ayant un coefficient de réflexion R, un couple d'angles ellipsométriques en réflexion ($\psi_r$, $\Delta_r$), un coefficient de transmission T et un couple d'angles ellipsométriques en transmission ($\psi_t$, $\Delta_t$);
- deux séparateurs finaux destinés à séparer respectivement chacun des faisceaux réfléchi et transmis en au moins deux faisceaux finaux,
- des moyens de détection destinés à mesurer les intensités des faisceaux finaux, et
- une unité de traitement reliée aux moyens de détection, produisant le vecteur de Stokes de la lumière à mesurer.

Selon l'invention, le séparateur initial comporte un prisme n'induisant pas d'effet interférentiel et ayant des propriétés, notamment un indice de réfraction $n_p$ et une disposition telles que le faisceau transmis subit au moins une réflexion interne au prisme selon un angle de réflexion interne.

Par « prisme », on entend un solide obtenu en coupant une surface prismatique par deux plans parallèles, la surface prismatique étant par définition engendrée par une droite de direction fixe qui se déplace en s'appuyant constamment sur le pourtour d'un polygone plan. La base du prisme est délimitée par ce polygone plan.

Chaque réflexion interne du faisceau transmis à l'intérieur du prisme produit un déphasage élémentaire entre la composante linéaire de polarisation dans le plan d'incidence (composante p) et la composante linéaire perpendiculaire au plan d'incidence (composante s). La somme de ces déphasages élémentaires est égale à l'angle ellipsométrique $\Delta_t$.

Dans un mode préféré de réalisation du polarimètre, l'absence d'effet interférentiel au cours d'une réflexion interne est obtenue en faisant en sorte que cette réflexion soit totale. Cette réflexion totale est produite grâce à la différence des indices de réfraction du prisme et de l'air et grâce à l'incidence du faisceau transmis sur le dioptre du prisme sur lequel a lieu la réflexion interne.

Dans un autre mode préféré de réalisation du polarimètre, les dioptres du prisme sur lesquels ont lieu les réflexions internes sont recouverts d'une couche absorbante épaisse. Par « couche absorbante épaisse », on entend une couche constituée d'un matériau non diélectrique, ayant une épaisseur de l'ordre de quelques longueurs de pénétration (cette dernière étant définie comme l'inverse de l'absorption).

Les séparateurs finaux séparent avantageusement chacun des faisceaux réfléchi et transmis en deux faisceaux finaux ayant des polarisations linéaires différentes. Les moyens de détection fournissent ainsi quatre intensités mesurées, à partir desquelles l'unité de traitement calcule les composantes du vecteur de Stokes S. De manière préférée, les polarisations linéaires sont orthogonales, les séparateurs finaux étant des prismes de Wallaston. De plus, il est intéressant que les prismes de Wallaston soient orientés à 45° par rapport au plan d'incidence. D'autres types de polariseurs séparant deux polarisations linéaires orthogonales d'un faisceau reçu conviennent également comme séparateurs finaux. De tels éléments permettent de conserver l'indépendance en longueur d'onde.

Les moyens de détection consistent par exemple en un ensemble de photodétecteurs associés respectivement aux faisceaux finaux.

Contrairement au polarimètre à division d'amplitude utilisant une lame séparatrice, le polarimètre selon l'invention ne nécessite aucun traitement de surface produisant des effets interférentiels, et peut ainsi être très peu sensible à la longueur d'onde. De plus, l'absence de revêtement interférentiel permet également d'être relativement insensible à l'angle d'incidence du faisceau incident sur le séparateur initial. L'influence de l'angle d'incidence est préférentiellement réduite par un choix approprié de l'indice de réfraction $n_p$ du prisme, de ses propriétés géométriques et de la valeur de l'angle d'incidence.

Le polarimètre selon l'invention offre également les avantages de pouvoir être compact, ce qui est très important pour des utilisations in situ, et de pouvoir ne pas comporter de composants optiques onéreux.

Dans un premier ensemble d'applications, le polarimètre est incorporé dans un ellipsomètre conventionnel de manière à améliorer la précision des mesures et à élargir le champ d'application à des milieux dépolarisants.

Dans un deuxième ensemble d'applications, le polarimètre est utilisé comme composant indépendant, par exemple en astrophysique.

Dans un troisième ensemble d'applications, le polarimètre est associé à un ellipsomètre de Mueller. Il permet ainsi d'effectuer des mesures sur des surfaces rugueuses ou des systèmes particulaires, y compris in situ et en temps réel. Différents domaines d'utilisations incluent le traitement de surfaces quelconques (acier et métaux....), la détection d'objets métalliques (applications militaires .....), l'étude de milieux anisotropes (supraconducteurs.....), la détection et la caractérisation de poudre (granulométrie), l'étude de l'environnement (aérosols ......) et des applications médicales diverses.

Les principes mathématiques à la base du polarimètre sont exposés ci-dessous. Ils donnent notamment des informations utiles pour l'optimisation des paramètres du polarimètre, de manière à assurer une faible dépendance à l'angle d'incidence, un bon niveau de sensibilité de mesure et/ou une faible propagation d'erreurs relatives sur les intensités au cours du calcul du vecteur de Stokes.

Le nombre d'intensités mesurées $i_K$ étant égal à n (n ≥ 4), le polarimètre est représenté par une matrice A de dimensions n x 4, qui vérifie la relation (« $^T$ » désignant l'opérateur de transposition):

$$(i_1\ i_2\ i_3\ .....\ i_n)^T = AS$$

Dans le cas où le nombre n de faisceaux finaux est égal à 4, on a donc, A étant une matrice réelle 4 x 4:

$$S = A^{-1} \cdot (i_1\ i_2\ i_3\ i_4)^T$$

De préférence, on maximise le conditionnement s (A) de la matrice A, donné par:

$$s(A) = \sqrt{\lambda_1 / \lambda_4}$$

où $\lambda_1$ et $\lambda_4$ sont la plus petite et la plus grande valeur propre de la matrice $A^T A$. On minimise ainsi la propagation des erreurs relatives sur les intensités après la multiplication par la matrice $A^{-1}$.

De plus, on maintient avantageusement la norme de la matrice A à une valeur suffisamment grande. On garde ainsi un bon niveau de sensibilité, du fait qu'une fraction significative de l'intensité de lumière peut être utilisée.

Préférentiellement, on minimise la fonction δ (A) donnée par:

$$\delta(A) = \sqrt{\sum_{i,j=1}^{4} \left(\frac{\partial A_{ij}}{\partial \phi_1}\right)^2}.$$

**3**

$A_{ij}$ désignant les composantes de la matrice A et $\phi_1$ représentant l'angle d'incidence sur le prisme du séparateur initial.

Les moyens de détection étant constitués de quatre photodétecteurs ayant respectivement des gains $G_1$, $G_2$, $G_3$ et $G_4$, la matrice A vaut:

$$A = D \cdot \begin{pmatrix} 1 & -\cos 2\Psi_r & \sin 2\Psi_r \cos\Delta_r & \sin 2\Psi_r \sin\Delta_r \\ 1 & -\cos 2\Psi_r & -\sin 2\Psi_r \cos\Delta_r & -\sin 2\Psi_r \sin\Delta_r \\ 1 & -\cos 2\Psi_t & \sin 2\Psi_t \cos\Delta_t & \sin 2\Psi_t \sin\Delta_t \\ 1 & -\cos 2\Psi_t & -\sin 2\Psi_t \cos\Delta_t & -\sin 2\Psi_t \sin\Delta_t \end{pmatrix}$$

$$\text{avec } D = \frac{1}{2} \begin{pmatrix} G_1 R & o & o & o \\ o & G_2 R & o & o \\ o & o & G_3 T & o \\ o & o & o & G_4 T \end{pmatrix}$$

Les gains $G_k$ des photodétecteurs étant, à titre d'exemple, identiques, le conditionnement de A est optimal quand:

$$R = T \approx 1/2$$

$$\Psi_r = \Psi_t = \pi/8 \text{ modulo } \pi/4$$

$$\Delta_r - \Delta_t = \pi/2 \text{ modulo } \pi$$

En l'absence d'effet interférentiel, $\Delta_r$ est nul et l'optimum correspond donc à:

$$\Delta_t = \pi/2 \text{ modulo } \pi.$$

De préférence, la somme des déphasages élémentaires par réflexions internes est alors voisine de $\pi/2$. Dans une forme avantageuse de réalisation, la sensibilité à l'angle d'incidence $\phi_1$ sur le prisme du séparateur initial est rendue faible en minimisant la sensibilité à l'angle d'incidence sur chacun des dioptres correspondant à une réflexion interne. Ainsi, dans le premier mode de réalisation avec réflexions internes totales, les angles de réflexions internes $\phi_3$ sont de façon optimale égaux à l'angle $\phi_m$, pour lequel les déphasages élémentaires $\Delta$ présentent un maximum $\Delta_m$:

$$\text{Cos}\Phi_m = \sqrt{\frac{n_p^2 - 1}{n_p^2 + 1}} \quad \Rightarrow \quad \begin{cases} \Delta_m = \pi + 4\text{ArcTan}(n_p) \\ \dfrac{\partial\Delta}{\partial\Phi} = 0 \end{cases}$$

D'une manière générale, il est nécessaire de choisir entre un bon conditionnement s(A) et une faible sensibilité $\delta$ (A) de la matrice A. Selon les besoins liés aux mesures, il peut être judicieux de privilégier l'un des deux critères par rapport à l'autre. Avantageusement, s(A) est supérieur à 0,3 (bon conditionnement) et/ou $\delta$ (A) est inférieur à 1 (faible sensibilité à l'angle d'incidence).

Dans un mode préféré de réalisation, au moins une des réflexions internes au prisme du séparateur initial est une réflexion totale. Il est alors intéressant que les angles de réflexions internes $\phi_3$ correspondant aux réflexions totales vérifient approximativement la relation:

$$\text{Cos}\phi_3 = \sqrt{\frac{n_p^2 - 1}{n_p^2 + 1}}$$

Dans un autre mode préféré de réalisation, au moins une des réflexions internes au prisme du séparateur initial est une réflexion sur une couche absorbante épaisse.

Selon une première forme de réalisation avantageuse du prisme, celui-ci a une base triangulaire comprenant un premier côté, un deuxième côté formant un premier angle d'ouverture avec le premier côté, et un troisième côté formant un second angle d'ouverture avec le deuxième côté, les premier, deuxième et troisième côtés de la base étant respectivement associés à des première, deuxième et troisième faces du prisme. Le faisceau incident parvenant sur la première face selon un angle d'incidence parallèlement à la base et étant séparé sur la première face en des faisceaux réfléchi et transmis, le faisceau transmis subit la réflexion interne sur la deuxième face et sort par la troisième face.

Dans des exemples préférés correspondant à la forme de réalisation avec base triangulaire du prisme, la réflexion interne est totale, l'indice de réfraction du prisme est compris entre 2,5 et 2,0 sur une plage de longueur d'onde comprise entre 0,4 $\mu$m et 14 $\mu$m et l'angle d'incidence et les premier et second angles d'ouverture valent respectivement, à un degré près:

- dans un premier exemple préféré: 81 °, 57° et 33°, et
- dans un second exemple préféré: 48°, 51° et 33°.

Dans une seconde forme de réalisation avantageuse du prisme, celui-ci a une base polygonale comprenant au moins un premier côté, un deuxième côté formant avec le premier côté un angle d'ouverture, un troisième côté parallèle au premier côté et un quatrième côté parallèle au deuxième côté, les premier, deuxième, troisième et quatrième côtés de la base étant respectivement associés à des première, deuxième, troisième et quatrième faces du prisme. Le faisceau incident parvient sur la première face selon un angle d'incidence parallèlement à la base et est séparé sur la première face en les faisceaux réfléchi et transmis, le faisceau transmis subit respectivement une première et une seconde des réflexions internes sur les deuxième et quatrième faces et sort par la troisième face.

Selon un exemple préféré de cette forme de réalisation avec base polygonale, l'indice de réfraction du prisme est compris entre 1,85 et 1,75 sur une plage de longueur d'onde comprise entre 0,4 et 2 $\mu$m et l'angle d'incidence et l'angle d'ouverture valent respectivement 78,5° et 68°, à un degré près.

L'invention concerne également un procédé de mesure d'états de polarisation d'un faisceau lumineux ayant un vecteur de Stokes dans lequel:

- on sépare le faisceau lumineux à mesurer en un faisceau réfléchi et un faisceau transmis,
- on sépare chacun des faisceaux réfléchi et transmis en au moins deux faisceaux finaux,
- on mesure les intensités des faisceaux finaux, et
- on produit le vecteur de Stokes de la lumière à mesurer à partir de ces intensités.

Selon l'invention, on fait subir au faisceau transmis au moins une réflexion interne à un prisme, sans induire d'effet interférentiel.

L'invention sera mieux comprise en référence à des modes particuliers de réalisation et de mise en oeuvre, données à titre d'exemples et illustrés sur les dessins annexés:

La Figure 1 représente un premier mode de réalisation d'un polarimètre selon l'invention, et
La Figure 2 représente un second mode de réalisation d'un polarimètre selon l'invention.

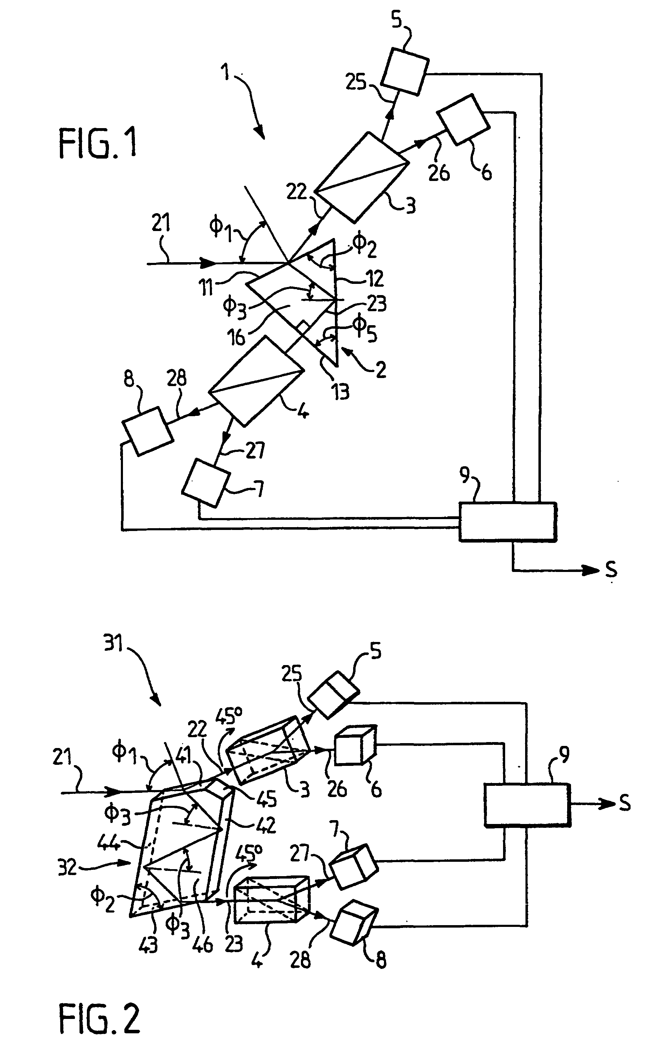

Sur les Figures 1 et 2, des éléments semblables sont désignés par les mêmes références.

Un polarimètre 1, représenté sur la Figure 1, comprend un prisme 2 ayant une base 16 triangulaire. Le prisme 2 comporte trois faces 11, 12 et 13 (perpendiculaires au plan de la feuille), correspondant respectivement à des côtés de la base triangulaire 16. Les faces 11 et 12 forment entre elles un angle $\phi_2$ et les faces 12 et 13 forment entre elles un angle $\phi_5$. Le prisme 2 ne comporte pas de traitement de surface et a un indice de réfraction $n_p$. Il est destiné à recevoir sur sa face 11 un faisceau incident 21 selon un angle d'incidence $\phi_1$, et à le séparer en un faisceau réfléchi

22 et un faisceau transmis 23. Les angles $\phi_1$, $\phi_2$, et $\phi_5$ et l'indice de réfraction $n_p$ sont choisis de telle sorte que le faisceau transmis 23 parvient sur la face 12 du prisme 2 selon un angle d'incidence $\phi_3$, est totalement réfléchi sur cette face 12 et sort par la face 13 perpendiculairement à cette face 13.

Le polarimètre 1 comprend aussi deux prismes de Wallaston 3 et 4 orientés à 45° par rapport au plan d'incidence, destinés à recevoir respectivement les faisceaux réfléchi 22 et transmis 23 et à les séparer chacun en deux faisceaux finaux, respectivement référencés 25 et 26 pour le faisceau réfléchi 22 et 27 et 28 pour le faisceau transmis 23.

Des photodétecteurs 5-8 sont disposés de manière à mesurer respectivement les intensités $i_1$-$i_4$ des faisceaux finaux 25-28. Ils sont reliés à une unité de traitement 9, qui produit le vecteur de Stokes S de la lumière du faisceau incident 21, à partir de ses intensités. Les photodétecteurs 5-8 sont par exemple des tubes photomultiplicateurs.

Dans une forme avantageuse de réalisation, le prisme 2 est constitué de ZnS, optimisé pour des applications dans les domaines visible et infrarouge, de 0,4 μm ($n_p$= 2,41) à 14 μm ($n_p$= 2,15).

Selon un premier exemple de cette forme avantageuse de réalisation:

$\phi_1$= 81,2°, $\phi_2$ = 56,9°, $\phi_5$ = 32,8°.

Cet exemple avec incidence rasante est d'une très grande efficacité (conditionnement s(A) = 0,57) et d'une sensibilité moyenne à l'angle d'incidence (sensibilité $\delta$(A) = 2,74).

Selon un second exemple de cette forme avantageuse de réalisation:

$\phi_1$= 48,4°, $\phi_2$= 50,8°, $\phi_5$=32,8°.

Cet exemple donne une efficacité relativement correcte (conditionnement S(A) = 0,2) et une très faible sensibilité à l'angle d'incidence $\delta$(A) = 0,33). De plus, cette configuration est très pratique d'un point de vue géométrique.

Un autre polarimètre 31 comprend un prisme 32 ayant une base 46 polygonale. Le prisme 32 comprend cinq faces 41-45, s'appuyant sur des côtés de la base 46 perpendiculairement à cette base 46. Les faces 41 et 43 sont parallèles, de même que les faces 42 et 44. La face 43 forme avec la face 44 un angle $\phi_2$. La face 41 et la face 42 forment donc aussi cet angle $\phi_2$, mais le coin formé par les faces 41 et 42 est tronqué, de manière à former la cinquième face 45.

En fonctionnement, la face 41 reçoit le faisceau incident 21 et le partage en un faisceau réfléchi 22 et un faisceau transmis 23. Le faisceau transmis 23 parvient avec un angle d'incidence $\phi_3$ sur la face 42 et s'y réfléchit totalement, puis avec le même angle d'incidence $\phi_3$ sur la face 44, sur laquelle il se réfléchit totalement. Il sort ensuite par la face 43. La face 45 est éventuellement dépolie ou noircie pour arrêter le faisceau parasite provenant de la face 43.

Les autres éléments du polarimètre 31 sont similaires à ceux du polarimètre 1 et fonctionnent de manière identique.

Dans un exemple avantageux de réalisation, consacré à des applications dans les domaines visible et en proche infrarouge, le prisme 32 est constitué d'un matériau en verre, par exemple du type commercialisé sous la référence FBS E00-46 par CORNING S.A. Son indice de réfraction $n_p$ décroît ainsi de 1,83 pour 0,4 μm à 1,76 pour 2 μm . Pour une longueur d'onde égale à 0,488 μm, 10% de l'intensité du faisceau transmis 23 étant absorbé dans le prisme 32, le prisme 32 de l'exemple est tel que:

$n_p$= 1,812, $\phi_1$= 78,5°, $\phi_2$= 68°.

La matrice $A_{exp}$ mesurée expérimentalement vaut alors:

$$A_{exp} = \begin{pmatrix} 425 & 0 & 0 & 0 \\ 0 & 375 & 0 & 0 \\ 0 & 0 & 336 & 0 \\ 0 & 0 & 0 & 312 \end{pmatrix} \begin{pmatrix} 1 & -0.65 & -0.81 & -0.04 \\ 1 & -0.54 & 0.82 & 0 \\ 1 & 0.6 & 0.06 & 0.83 \\ 1 & 0.54 & -0.08 & -0.83 \end{pmatrix}$$

Elle est très proche de sa valeur théorique. De plus l'angle $\phi_3$ vaut approximativement 35°. Une très bonne efficacité est obtenue (conditionnement mesurée s($A_{exp}$) = 0,5 et conditionnement théorique s(A) = 0,56). De plus, la sensibilité théorique $\delta$($A_{exp}$) à l'angle d'incidence est égale à 2,6. La diminution de l'angle d'incidence $\phi_1$ permet de réduire la sensibilité à l'angle d'incidence, en diminuant l'efficacité.

De plus, la dispersion de l'indice de réfraction de 0,4 μm à 2 μm conduit à une variation de quelques pourcent de la matrice A. Le calibrage doit donc être effectué à différentes longueurs d'onde. Le faisceau transmis 23 présente une petite dispersion spatiale compatible avec la plupart des fenêtres optiques de polariseurs et de photodétecteurs disposés à une distance raisonnable du prisme 32.

A titre comparatif, un polarimètre à division d'amplitude comprenant un séparateur de faisceaux recouvert de diélectrique ou de semi-conducteur (K. Brudzewski, Journal of Modern Optics, vol. 38, p. 889, 1991) correspond respectivement à un conditionnement de l'ordre de 0,1 à 0,2 et de l'ordre de 0,3 à 0,4, et à une sensibilité à l'angle d'incidence de l'ordre de 2,6. Le polarimètre selon l'invention permet donc d'améliorer sensiblement ces performances.

**Revendications**

1. Polarimètre (1, 31) comprenant:

   - un séparateur initial destiné à séparer un faisceau incident (21) de lumière à mesurer ayant un vecteur de Stokes (S) en un faisceau réfléchi (22) et un faisceau transmis (23), ledit séparateur ayant un coefficient de réflexion (R), un couple d'angles ellipsométriques en réflexion ($\psi_r$, $\Delta_r$), un coefficient de transmission (T) et un couple d'angles ellipsométriques en transmission ($\psi_t$, $\Delta_t$),
   - deux séparateurs finaux (3, 4) destinés à séparer respectivement chacun des faisceaux réfléchi (22) et transmis (23) en au moins deux faisceaux finaux (25-28),
   - des moyens de détection (5-8) destinés à mesurer les intensités ($i_1$-$i_4$) des faisceaux finaux, et
   - une unité de traitement (9) reliée aux moyens de détection, produisant le vecteur de Stokes (S) de la lumière à mesurer,

   **caractérisé en ce que** le séparateur initial comporte un prisme (2, 32) n'induisant pas d'effet interférentiel et ayant des propriétés, notamment un indice de réfraction ($n_p$), et une disposition telles que ledit faisceau transmis (23) subit au moins une réflexion interne audit prisme (2, 32), selon un angle de réflexion interne ($\phi_3$).

2. Polarimètre selon la revendication 1, **caractérisé en ce qu'**au moins une desdites réflexions internes au prisme (2, 32) du séparateur initial est une réflexion totale.

3. Polarimètre selon la revendication 2, **caractérisé en ce que** lesdits angles de réflexion interne ($\phi_3$) correspondant auxdites réflexions totales vérifient approximativement la relation:

$$\mathrm{Cos}\phi_3 = \sqrt{\frac{n_p^2 - 1}{n_p^2 + 1}}$$

4. Polarimètre selon l'une quelconque des revendications 1 à 3, **caractérisé en ce qu'**au moins une desdites réflexions internes au prisme du séparateur initial est une réflexion sur une couche absorbante épaisse.

5. Polarimètre selon l'une quelconque des revendications précédentes, **caractérisé en ce que** ledit prisme (2) a une base triangulaire (16) comprenant un premier côté, un deuxième côté formant un premier angle d'ouverture ($\phi_2$) avec le premier côté, et un troisième côté formant un second angle d'ouverture ($\phi_5$) avec le deuxième côté, les premier, deuxième et troisième côtés de la base (16) étant respectivement associés à des première, deuxième et troisième faces (11-13) dudit prisme (2), ledit faisceau incident (21) parvenant sur la première face (11) selon un angle d'incidence ($\phi_1$) parallèlement à ladite base (16) et étant séparé sur ladite première face (11) en les faisceaux réfléchi (22) et transmis (23), le faisceau transmis subissant ladite réflexion interne sur la deuxième face (12) et sortant par la troisième face (13).

6. Polarimètre selon la revendication 5, **caractérisé en ce que** ladite réflexion interne est totale, l'indice de réfraction ($n_p$) du prisme est compris entre 2,5 et 2,0 sur une plage de longueur d'onde comprise entre 0,4 µm et 14 µm et l'angle d'incidence ($\phi_1$) et les premier et second angles d'ouverture ($\phi_2$, $\phi_5$) valent respectivement 81°, 57° et 33°, à un degré près.

7. Polarimètre selon la revendication 5, **caractérisé en ce que** ladite réflexion interne est totale, l'indice de réfection ($n_p$) du prisme est compris entre 2,5 et 2,0 sur une plage de longueur d'onde comprise entre 0,4 µm et 14 µm et l'angle d'incidence ($\phi_1$) et les premier et second angles d'ouverture ($\phi_2$, $\phi_5$) valent respectivement 48°, 51° et 33° à un degré près.

8. Polarimètre selon l'une quelconque des revendications 1 à 4, **caractérisé en ce que** ledit prisme (32) a une base polygonale (46) comprenant au moins un premier côté, un deuxième côté formant avec le premier côté un angle d'ouverture ($\phi_2$), un troisième côté parallèle au premier côté et un quatrième côté parallèle au deuxième côté, les premier, deuxième, troisième et quatrième côtés de la base (46) étant respectivement associés à des première, deuxième, troisième et quatrième faces (41-44) dudit prisme (32), ledit faisceau incident (21) parvenant sur la première face (41) selon un angle d'incidence ($\phi_1$) parallèlement à ladite base (46) et étant séparé sur ladite première face en les faisceaux réfléchi (22) et transmis (23), le faisceau transmis subissant respectivement une première et une seconde desdites réflexions internes sur les deuxième et quatrième faces (42, 44) et sortant par la troisième face (43).

9. Polarimètre selon la revendication 8, **caractérisé en ce que** lesdites réflexions internes sont totales, l'indice de réfraction ($n_p$) du prisme (32) est compris entre 1,85 et 1,75 sur une plage de longueur d'onde comprise entre 0,4 et 2 µm et l'angle d'incidence ($\phi_1$) et l'angle d'ouverture ($\phi_2$) valent respectivement 78,5° et 68°, à un degré près.

10. Procédé de mesure d'états de polarisation d'un faisceau lumineux (21) ayant un vecteur de Stokes (S), dans lequel:

   - on sépare ledit faisceau lumineux à mesurer en un faisceau réfléchi (22) et un faisceau transmis (23),
   - on sépare chacun desdits faisceaux réfléchi (22) et transmis (23) en au moins deux faisceaux finaux (25-28),
   - on mesure les intensités ($i_1$-$i_4$) des faisceaux finaux (25-28), et
   - on produit le vecteur de Stokes (S) de la lumière à mesurer à partir desdites intensités,

   **caractérisé en ce qu'**on fait subir audit faisceau transmis (23) au moins une réflexion interne à un prisme (2, 32), sans induire d'effet interférentiel.

**Patentansprüche**

1. Polarimeter (1,31) mit

   - einem Anfangsseparator, der dazu bestimmt ist, einen zu messenden einfallenden Lichtstrahl (21), der einen Stokes-Vektor (S) hat, in einen reflektierten Strahl (22) und in einen übertragenen Strahl (23) zu trennen, wobei der Separator einen Reflexionskoeffizienten (R), ein Paar ellipsometrische Reflexionswinkel ($\psi_r$, $\Delta_r$), einen Übertragungskoeffizienten (T) und ein Paar ellipsometrische Übertragungswinkel ($\psi_t$, $\Delta_t$) hat,

   - zwei Endseparatoren (3, 4), die dazu bestimmt sind, jeweils den reflektierten Strahl (22) und den übertragenen Strahl (23) in mindestens zwei Endstrahlen (25-28) zu teilen,

   - Mitteln zum Erfassen (5-8), die dazu bestimmt sind, die Stärken ($i_1 i_4$) der Endstrahlen zu messen, und

   - einer Verarbeitungseinheit (9), die an die Erfassungsmittel angeschlossen ist, die den Stokes-Vektor (S) des zu messenden Lichts erzeugt,

   **dadurch gekennzeichnet, dass** der Anfangsseparator ein Prisma (2, 32) umfasst, das keinen Interferenzeffekt induziert und Eigenschaften hat, insbesondere einen Brechungsindex ($n_p$), und eine Position hat, die derart sind, dass der übertragene Strahl (23) im Prisma (2, 32) mindestens einer internen Reflexion gemäß einem internen Reflexionswinkel ($\phi_3$) unterworfen wird.

2. Polarimeter nach Anspruch 1, **dadurch gekennzeichnet, dass** mindestens eine der im Prisma (2, 32) des Anfangsseparators erzeugten internen Reflexionen eine Totalreflexion ist.

3. Polarimeter nach Anspruch 2, **dadurch gekennzeichnet, dass** die Winkel der internen Reflexion ($\phi_3$), die den Totalreflexionen entsprechen, näherungsweise folgende Beziehung erfüllen:

$$\cos\phi_3 = \sqrt{\frac{n_p^2-1}{n_p^2+1}}$$

4. Polarimeter nach einem der Ansprüche 1 bis 3, **dadurch gekennzeichnet, dass** mindestens eine der im Prisma des Anfangsseparators auftretenden internen Reflexionen eine Reflexion auf einer dicken absorbierenden Schicht ist.

5. Polarimeter nach einem der vorhergehenden Ansprüche, **dadurch gekennzeichnet, dass** das Prisma (2) eine Dreiecksbasis (16) hat, die eine erste Seite, eine zweite Seite, die einen ersten Öffnungswinkel ($\phi_2$) mit der ersten Seite bildet, und eine dritte Seite hat, die mit der zweiten Seite einen zweiten Öffnungswinkel ($\phi_5$) bildet, wobei die erste, zweite und dritte Seite der Basis (16) jeweils der ersten, zweiten und dritten Fläche (11-13) des Prismas (2) zugeordnet sind, wobei der einfallende Strahl (21) auf der ersten Fläche (11) mit einem Einfallswinkel ($\phi_1$) parallel zur Basis (16) auftrifft und auf der ersten Fläche (11) in den reflektierten Strahl (22) und den übertragenen Strahl (23) getrennt wird und wobei der übertragene Strahl die interne Reflexion auf der zweiten Fläche (12) erfährt und über die dritte Fläche (13) austritt.

6. Polarimeter nach Anspruch 5, **dadurch gekennzeichnet, dass** die interne Reflexion total ist, wobei der Brechungsindex ($n_p$) des Prismas zwischen 2,5 und 2,0 auf einem Wellenlängenbereich zwischen 0,4 µm und 14 µm liegt, und der Einfallswinkel ($\phi_1$) und der erste und der zweite Öffnungswinkel ($\phi_2$, $\phi_5$) jeweils auf einen Grad genau 81°, 57° und 33° betragen.

7. Polarimeter nach Anspruch 5, **dadurch gekennzeichnet, dass** die interne Reflexion komplett ist, wobei der Brechungsindex ($n_p$) des Prismas zwischen 2,5 und 2,0 auf einem Wellenlängenbereich zwischen 0,4 µm und 14 µm liegt, und der Einfallswinkel ($\phi_1$) und der erste und der zweite Öffnungswinkel ($\phi_2$, $\phi_5$) jeweils auf einen Grad genau 48°, 51° und 33° betragen.

8. Polarimeter nach einem der Ansprüche 1 bis 4, **dadurch gekennzeichnet, dass** das Prisma (32) eine Vieleckbasis (46) hat, die mindestens eine erste Seite umfasst, wobei eine zweite Seite mit der ersten Seite einen Öffnungswinkel ($\phi_2$) bildet, und eine dritte Seite parallel zur ersten Seite und eine vierte Seite parallel zur zweiten Seite hat, wobei die erste, zweite, dritte und vierte Seite der Basis (46) jeweils der ersten, zweiten, dritten und vierten Fläche (41-44) des Prismas (32) zugeordnet sind, wobei der einfallende Strahl (21) auf der ersten Fläche (41) mit einem Einfallswinkel ($\phi_1$) parallel zur Basis (46) auftrifft und auf der ersten Fläche in den reflektierten Strahl (22) und den übertragenen Strahl (23) getrennt wird, und wobei der übertragene Strahl jeweils einer ersten und einer zweiten der internen Reflexionen auf der zweiten und vierten Fläche (42, 44) unterworfen wird und über die dritte Fläche (43) austritt.

9. Polarimeter nach Anspruch 8, **dadurch gekennzeichnet, dass** die internen Reflexionen total sind, wobei der Brechungsindex ($n_p$) des Prismas (32) zwischen 1,85 und 1,75 auf einem Wellenlängenbereich zwischen 0,4 und 2 µm liegt, und dass der Einfallswinkel ($\phi_1$) und der Öffnungswinkel ($\phi_2$) jeweils bis auf einen Grad genau 78,5° und 68° betragen.

10. Messverfahren für Polarisationszustände eines Lichtstrahls (21), der einen Stokes-Vektor (S) hat, bei dem:

- man den zu messenden Lichtstrahl in einen reflektierten Strahl (22) und einen übertragenen Strahl (23) trennt,
- man den reflektierten Strahl (22) und den übertragenen Strahl (23) in mindestens zwei Endstrahlen (25-28) trennt,
- man die Stärken ($i_1$-$i4$) der Endstrahlen (25-28) misst und
- den Stokes-Vektor (S) des zu messenden Lichts ausgehend von den Stärken erzeugt,

**dadurch gekennzeichnet, dass** man den übertragenen Strahl (23) mindestens einer internen Reflexion an einem Prisma (2, 32) unterwirft, ohne einen Interferenzeffekt zu induzieren.

**Claims**

1. A polarimeter (1, 31) comprising:

- an initial separator provided for separating an incident beam (21) of light to be measured with a Stokes vector (S) into a reflected beam (22) and a transmitted beam (23), whereas the said separator has a reflection coefficient (R), a couple of ellipsometric angles in reflection ($\psi_r$, $\Delta_r$), a transmission coefficient (T) and a couple of ellipsometric angles in transmission ($\psi_t$, $\Delta_t$),

- two final separators (3, 4) provided for separating respectively each of the reflected (22) and transmitted (23) beams into at least two final beams (25-28),
- means of detection (5-8) provided for measuring the intensities ($i_1$-$i_4$) of the final beams, and
- a processing unit (9) linked to the means of detection, producing the Stokes vector (S) of the light to be measured,

**characterised in that** the initial separator comprises a prism (2, 32) that does not induce any spurious effect and having properties, notably such a refraction index ($n_p$) and a configuration that the said transmitted beam (23) undergoes at least one internal reflection to the said prism (2, 32) according to an angle of internal reflection ($\phi_3$).

2. A polarimeter according to claim 1, **characterised in that** at least one of the said internal reflections to the prism (2, 32) of the initial separator is a total reflection.

3. A polarimeter according to claim 2, **characterised in that** the said angles of internal reflection ($\phi_3$) corresponding to the said total reflections verify approximately the following relation:

$$\cos\Phi_3 = \sqrt{\frac{n_p^2-1}{n_p^2+1}}$$

4. A polarimeter according to any of the claims 1 to 3, **characterised in that** at least one of the said internal reflections to the prism of the initial separator is a reflection on a thick absorbing layer.

5. A polarimeter according to any of the previous claims, **characterised in that** the said prism (2) has a triangular base (16) comprising a first side, a second side forming a first angle of aperture ($\phi_2$) with the first side and a third side forming a second angle of aperture ($\phi_3$) with the second side, whereas the first, second and third sides of the base (16) are respectively associated with the first, second and third faces (11-13) of the prism (2), whereas the said incident beam (21) reaches the first face (11) according to an angle of incidence ($\phi_1$) parallel to the said base (16) and is separated on the first face (11) into the reflected (22) and transmitted (23) beams, whereby the transmitted beam undergoes the said internal reflection on the second face (12) and goes out through the third face (13).

6. A polarimeter according to claim 5, **characterised in that** the said internal reflection is total, the refraction index ($n_P$) of the prism ranges between 2.5 and 2.0 over a wavelength range between 0.4 µm and 14 µm and the angle of incidence ($\phi_1$) and the first and second angles of aperture ($\phi_2$, $\phi_5$) are respectively, 81°, 57° and 33°, give or take one degree.

7. A polarimeter according to claim 5, **characterised in that** the said internal reflection is total, the refraction index ($n_P$) of the prism ranges between 2.5 and 2.0 over a wavelength range between 0.4 µm and 14 µm and the angle of incidence ($\phi_1$) and the first and second angles of aperture ($\phi_2$, $\phi_5$) are respectively, 48°, 51° and 33°, give or take one degree.

8. A polarimeter according to any of the claims 1 to 4, **characterised in that** the said prism (32) has a polygonal base (46) comprising at least a first side, a second side forming with the first side an angle of aperture ($\phi_2$), a third side parallel to the first side and a fourth side parallel to the second side, whereas the first, second, third and fourth sides of the base (46) are respectively associated with first, second, third and fourth faces (41-44) of the said prism (32), whereas the incident beam (21) reaches the first face (41) according to an angle of incidence parallel ($\phi_1$) to the said base (46) and is separated on the first face into the reflected (22) and transmitted (23) beams, whereas the transmitted beam undergoes respectively a first and a second internal reflections on the second and fourth faces (42, 44) and goes out through the third face (43).

9. A polarimeter according to the claim 8, **characterised in that** the said internal reflections are total, the refraction index ($n_P$) of the prism (32) ranges between 1.85 and 1.75 on a wavelength range comprised between 0.4 and 2 µm and the angle of incidence ($\phi_1$) and the angle of aperture ($\phi_2$) are respectively 78.5° and 68°, give or take one degree.

10. A process for measuring polarisation states of a light beam (21) with a Stokes vector (S) in which:

- the light beam to be measured is separated into a reflected beam (22) and a transmitted (23) beam,
- each of the reflected (22) and transmitted (23) beams are separated into at least two final beams (25-28),
- the intensities ($i_1$-$i_4$) of the final beams (25-28) are measured, and
- the Stokes vector (S) of the light to be measured is produced on the basis of these intensities,

**characterised in that** the transmitted (23) beam undergoes at least one internal reflection to a prism (2, 32), without inducing any interference effect.

FIG.1

FIG.2